(19) Europäisches Patentamt
European Patent Office
Office européen des brevets

(11) Publication number: **0 144 054**
**B1**

(12) **EUROPEAN PATENT SPECIFICATION**

(45) Date of publication of patent specification: **30.05.90**

(51) Int. Cl.$^5$: **B 01 D 69/12** // B01D53/22

(21) Application number: **84114268.0**

(22) Date of filing: **26.11.84**

(60) **Divisional application 89108619.1 filed on 26/11/84.**

# (54) Composite films adapted for selective gas separation.

(30) Priority: **26.11.83 JP 222536/83**
**28.11.83 JP 223640/83**
**26.12.83 JP 250500/83**
**28.09.84 JP 203408/84**

(43) Date of publication of application:
**12.06.85 Bulletin 85/24**

(45) Publication of the grant of the patent:
**30.05.90 Bulletin 90/22**

(84) Designated Contracting States:
**DE FR GB**

(56) References cited:
**EP-A-0 030 451**
**EP-A-0 152 011**
**FR-A-2 306 003**
**FR-A-2 482 516**

**Patent Abstracts of Japan, vol. 6, no. 63, (C-99)(941), April 22, 1982**

(73) Proprietor: **Matsushita Electric Industrial Co., Ltd.**
**1006, Oaza Kadoma**
**Kadoma-shi Osaka-fu, 571 (JP)**

(72) Inventor: **Kawahito, Midori**
**5-3-20, Tokumaru**
**Itabashi-ku Tokyo (JP)**
Inventor: **Saito, Yukihiro**
**3-1-3, Fujisaki**
**Kawasaki-ku Kawasaki (JP)**
Inventor: **Asakawa, Shiro**
**4-3011-18, Iriya**
**Zama-shi Kanagawa-ken (JP)**
Inventor: **Kashima, Takafumi**
**30-23, Miyuki Higashi-cho**
**Neyagawa-shi Osaka (JP)**

(74) Representative: **Struif, Bernward, Dipl.-Chem. Dr. et al**
**Patentanwaltsbüro Tiedtke, Bühling, Kinne Grupe, Pellmann, Grams, Struif Bavariaring 4**
**D-8000 München 2 (DE)**

**EP 0 144 054 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(56) References cited:
PATENT ABSTRACTS OF JAPAN , vol.3, no. 100 (C-56)(104) 24th August 1979 & JP -A- 54 79 177

PATENT ABSTRACTS OF JAPAN, vol. 7,no.225 (C-189)(1370) 6th October 1983 & JP-A-58 119 304

PATENT ABSTRACTS OF JAPAN , vol. 7, no.235 (C-191) (1380) 19th October 1983 &JP-A-58 128 109

CHEMICAL ENGINEERING PROGRESS, vol.78, no. 10, October 1982, pages 27-32, New York, US; W.A. BOLLINGER et al.: "Separation systems for oil refining and production "

PATENT ABSTRACTS OF JAPAN, vol. 9, no. 108 (C-280) (1831) 11th May 1985 & JP-A-60 807

**Description**

This invention relates to gas-permeable composite films for selective separation which are useful in separating and concentrating an intended gas from mixed gases and can stably keep their characteristics over a long period of time.

Enrichment or separation of an intended gas from mixed gases is often necessary in industrial fields or in actual life. For instance, there are known production of oxygen-enriched air used in combustion, medical applications and waste treatments, separation or recovery of helium from natural gases and the like, and separation of hydrogen from mixed gases obtained in thermal cracking of coal.

In recent years, a number of methods of separating and concentrating an intended gas from mixed gases using polymer films have been proposed. In fact, several techniques of separating useful gases such as hydrogen, nitrogen, oxygen and the like from exhausts from plants, natural gases and air have been already put into practice. However, the proposed methods all comprise direct contact of mixed gases with polymer films. Thus, such methods involve the serious problem that it is difficult to keep good gas permeability of the films over a long term because of the dirt contained in the mixed gases.

In United States Patent No. 3,874,986, there are described selectively gas-permeable composite films of polyphenylene oxide/polydimethylsiloxane-polycarbonate copolymers having the polydimethylsiloxane-polycarbonate copolymer on the surface thereof. We made an experiment using the above composite film in which the film was formed on a microporous polypropylene film and was processed to give pieces of a modular dimension and placed at a portion near an exhaust port of a plant. Thereafter, an exhaust was passed under a pressure of $-70.49 \times 10^3$ Pa ($-530$ mmHg). As a result, it was found that the flow rate of the gas passed through the composite film, in some cases, lowered by 20 to 30% after about 1000 hours of the operation.

A similar experiment was also conducted by us using polyhydroxystyrene-polysulfone-polydimethylsiloxane copolymers described in European Patent Application No. 82303791.6 of the same assignee. The results of the experiment revealed that the flow rate of the gas passed through the composite film lowered by 20 to 30% after about 1500 hours of the operation.

As will be seen from the above, the known composite films which have good gas permeability at an initial stage deteriorate after a substantial time of the operation, as time passes, to such an extent as will not be used in practical applications.

Ultrathin films which are chiefly composed of polyphenylene oxide are hard and are liable to suffer fatigue by application of mechanical stress thereto when used as gas separator films. Such films are readily attacked by means of oxygen in an ambient atmosphere and are apt to deteriorate with a lowering of gas permeability in relation to time.

It is accordingly an object of the present invention to provide ultrathin composite films for gas separation which overcome the drawbacks of the prior art film and which can maintain a high gas permeability characteristic over a long term.

It is another object of the invention to provide ultrathin composite films which have good gas separability and permeability.

Broadly, there is provided, according to the invention, a selectively gas-permeable composite film which comprises a gas-selective ultrathin film consisting of at least one layer for separating and concentrating an intended gas from mixed gases and a covering layer formed on the film and having a thickness of from 5 to 20 nm (50 to 200 angstroms). The covering layer is made of a polymer having a critical surface tension not larger than 30 dyne/cm and has a contact angle with water on its out surface should be 90° or higher.

The gas-selective film is formed on a microporous polymer support. Preferably, the film is made of two or three layers comprising a first ultrathin layer of a polymer having good gas permeability or separability and a second layer of a polymer having good gas separability and formed on the first layer. If the first layer is made of a polymer of good gas permeability, the first and second layers may be arranged in this or reverse order. Most preferably, the gas-selective film is made of a three-layered construction which comprises a first ultrathin layer of a polymer having good gas permeability, a second ultrathin layer of a polymer having good gas separability and a third ultrathin layer formed on the second layer and having good gas permeability. In this layer construction, the first layer should have a thickness from 0.2 to 1.0 µm and an oxygen permeation constant of $0.752\ m^2.5^{-1}.Pa^{-1}$ ($1 \times 10^{-8}$ cc.cm/cm$^2$.second.cmHg) or higher.

Fig. 1 is a schematic view of a gas-permeable composite film according to one embodiment of the invention;

Figs. 2 and 3 are, respectively, graphs showing the relation between reduction rate in flow rate or amount of a permeated gas and operating time for composite films of the present invention and comparative films;

Fig. 4 is a schematic view of a gas-selective film comprising a plurality of layers according to another embodiment of the invention; and

Fig. 5 is a graph showing the relation between variation rate in flow rate of a permeated gas and operating time for the selective film used with regard to Fig. 4 and a comparative film.

Gas separation methods using gas-permeable films usually comprise the step of directly contacting mixed gases with the film through which the gas is passed. The film naturally undergoes various actions

from outside and are apt to deteriorate in nature as time passes. According to our experiments, one of the main reasons why gas-permeable composite films deteriorate with time is considered due to deposition, on the film surface, of uneliminable fine particles (e.g. oil droplets or microsols having a diameter of from 0.1 to 1 μm) in mixed gases contacting with the film surface. In order to prevent contamination of solid surfaces, it is the usual practice to coat the solid surface with materials having small surface energy thereby imparting water or oil repellency to the solid surface. However, such materials are, in most cases, small in gas permeability and are very difficult to apply to gas-permeable composite films.

We made intensive studies on such coatings as mentioned above. As a result, it was found that when a gas-selective layer was covered or coated with a material having small surface energy in a controlled thickness of from 5 to 20 nm (from 50 to 200 angstroms), the resulting gas-permeable composite film which was rarely contaminated with micro foreign matters without any significant variation in flow rate of a permeated gas. To this end, the covering layer should have a critical surface tension, $\gamma_c$, of not higher than 30 dyne/cm and a constant angle, θ, of water with the surface of the covering layer contacting with mixed gases should be 90° or higher. If the surface whose contact angle is smaller than 90°, it is liable to contaminate due to the hydrophilicity thereof.

When the covering layer is made of materials having a small surface tension but has a thickness below 5 nm (50 angstrom), surface properties of the covering layer may be greatly influenced by surface properties of the lower gas selective film. Especially, when the selective film is made of a hydrophilic material, the contact angle of the outer surface may become too small.

On the contrary, when the thickness exceeds 20 nm (200 angstrom), the rate of permeation through the composite film will be reduced because of the small gas permeability of the covering layer. When the thickness lies within a range from 5 to 20 nm (from 50 to 200 angstrom), the resulting covering layer is not arranged so dense but involves fine pinholes, so that little fine particles in the gas being passed are deposited thereon and the gas is allowed to smoothly pass through the composite film.

It is important to note that the covering layer should have good oil or water repellency without a sacrifice of other desirable properties such as flexibility, surface tension and the like. For these purposes, materials for the covering layer should be polymers having a critical surface tension, $\gamma_c$, of not higher than 30 dyne/cm, preferably below 25 dyne/cm and the covering layer should have a contact angle not lower than 90°. In order to ensure the above requirements, the covering layer may be cured with or without catalysts. This is true of polymethylhydrogen-siloxane when used as the covering layer.

Examples of the materials for the covering layer suitable for the practice of the invention include: fluorine resins having surface chemical structure units of the following formulas,

$$-CF_2-CFH-,\ -CF_2-CFCl-,\ -CF_2-CH_2,\ CFH-CH_2,\ -\underset{CF_3}{\underset{|}{CF}}-O-,\ \text{and}\ -\overset{CH_3}{\overset{|}{\underset{RF}{\underset{|}{Si}}}}-O-$$

in which RF represents a member selected from $-CF_3$, $-CH_2-CF_3$ and $-CH_2-CH_2-CF_3$; polyolefins or diene polymers such as polybutene, polyisobutene, polypentene, polymethylpentene, polyhexene, polymethylhexene, polyheptene, polycyclohexylpentene, polystyrene, poly-alpha-methylstyrene, polybutadiene, polyisoprene, polycyclooctadiene and the like; and polyorganosiloxanes. It will be noted that, in most cases, the above-indicated polymers meet the requirements for the conact angle and critical surface tension, but the nature of the polymers may, more or less, vary depending on the production conditions and the like. In this sense, polymers used should be finally determined after confirmation of the characteristic requirements. More specifically, polymethylhydrogensiloxane, fluorinated alkylmethacrylate resins, poly-4-methylpentene-1, polymethyl fluorinated alkysilioxanes and mixtures thereof are most preferably because these polymers or resins fully satisfy both requirements of $\gamma_c < 30$ dyne/cm and $\theta > 90°$. Moreover, these polymers have conveniently the ability of readily forming ultrathin flat films of a desired thickness. The films of these polymers may be superposed in one or more layers in practical applications. For the formation of the ultrathin film, a dilute solution of polymer having a concentration of several percent is first prepared and allowed to spread over a confined water surface, followed by removing the solvent from the spread film thereby obtaining an ultrathin film having small surface energy. The ultrathin films of the above-indicated most preferable polymers have very good protecting effects.

If materials for the covering layer are liquid, they may be directly sprayed over a gas-selective film to form a covering layer on the film.

If polymethylhydrogensiloxane is used, the catalyst such as tetrabutyl tin is added to harden the resulting film. The polysiloxane may be cured or hardened at room temperature but the curing will be facilitated by application of heat.

The gas-selective ultrathin film may be a single layer or a plurality of unified layers. The materials for use as the layer or layers may, more or less, depend on the purpose and the type of gas being enriched or selected. Any known gas-selective materials may be used in the practice of the invention, including polydimethylsiloxane-polycarbonate copolymer, copolymers of polyhydroxystyrene-polysulfonepolydimethyl-siloxane and the like. These polymers may be used in combination as separate layers. In addition, polyphenylene oxide, polyolefins and polyacetylenes which will be more particularly described with

reference to a gas-selective film of a three-layered structure are also useful. Especially, better results are obtained when the selective film adhered to the covering layer comprises a reaction product of copolymer of polyhydroxystyrene-polysufone-polydiemthylsiloxane when the film is made of a single layer. The manner of copolymerization or interaction of these polymers are described in EP—A—0.070.730 indicated before. The copolymer may be used singly or even in combination with other type of polymer. If this copolymer is used in combination, the copolymer should be contained in an amount of from 50 to 90 wt% of the composition. Polymers usable in combination with the copolymer include, for example, polystyrene, polymethyl methacrylate and the like.

In Fig. 1, there is shown a typical ultrathin composite film F which includes a covering layer 1, a gas-selective film 2 and a microporous polymer support 3 arranged in this order. This type of composite film is particularly described by way of examples below.

Example 1

Fluorinated alkyl methacrylate resin having a critical surface tension of 11 dyne/cm was used as a polymer for covering layer 1 as shown in Fig. 1 and Diflon® S3 (Sumitomo Chemicals. Ind. Co., Ltd.) solution comprising 2 to 4 wt% of the polymer was provided as a spreading solution for the layer 1. Polyhydroxystyrene-polysulfone-polydimethylsiloxane resin was provided as the gas-selective ultrathin film 2 and a 2 to 4 wt% benzene solution was used as a spreading solution of the film 2. These solutions were, respectively, dropped and spread over confined water surfaces on which the polymer films were formed. These films were adhered to the support 3 (Celegard® 2400, by Celanese Plastics Company) in the order of the film 2 and the covering layer 1, thereby obtaining a gas-permeable composite film F shown in Fig. 1.

The above composite film was subsequently arranged to have a modular dimension of 30 cm × 30 cm and placed at a position near an exhaust port of a plant, followed by continuously operating a vacuum pump to a reduced pressure $70.48 \times 10^3$ Pa (530 mmHg) to determine a variation in amount of the gas passed through the composite film. The composite film of this example show little variation of the amount in relation to time as shown by curve A in Fig. 2. Even when the operation was continued over 10,000 hours, the amount lowered only by about 5%.

The above procedure was repeated for comparison except that the covering layer 1 was not formed. The variation of the amount of this prior art film is shown as curve B in Fig. 2, revealing that the amount lowered by about 30% after 1000 hours of the continuous operation.

As will be seen from the above, the composite film of the present invention in which the film 2 was covered with the covering layer 1 made of the polymer having a small surface tension was very effective in preventing deterioration thereof even when used over a long term.

It will be noted that the spreading over water surfaces is advantageous in forming a film of a large area at a time.

Example 2

The general procedure of Example 1 was repeated except that poly-4-methylpentene-1 having a critical surface tension of 25 dyne/cm was used as the polymer for the covering layer 1. The resulting composite film had such a small variation in amount of the exhaust gas permeated in relation to time as shown by curve C in Fig. 2. The amount lowered by as small as about 10% even after 10,000 hours.

Example 3

The general procedure of Example 1 was repeated except that polymethyl fluorinated alkylsiloxane, e.g. polymethylperfluoropropylsiloxane, having a critical surface tension of 21 dyne/cm was used, without dilution, as the covering layer 1 by spraying over the selective film adhered to the support 3 to form the covering layer 1.

The resulting composite film was small in variation of the amount as indicated by curve D in Fig. 2. The amount lowered only by 8% even after 10,000 hours of the continuous operation.

The polymer used in this example was liquid at normal temperature and was suitable applied by spraying, ensuring the very simple ultrathin film-forming operation.

Example 4

The general procedure of Example 1 was repeated except that a two-layered structure of a polyphenylene oxide/ a copolymer of polydimethylsiloxane-polycarbonate units was used as the gas-selective layer. The resulting composite film showed results similar to the composition film of Exampe 1.

In the above examples, three polymers were used as the covering layer 1 and two polymers were used as the gas-selective film 2. When other polymers indicated before were used, a variation in amount of permeation was in the range of from 5 to 10% after 10,000 hours of the continuous operation and thus the results were good. In the above examples, the gas-selective film is made of a single layer but two or more layers may be superposed.

Example 5

Polymethylhydrogensiloxane having a critical surface tension of 11 dyne/cm was mixed with 3 wt% of tetrabutyl tin as a catalyst for the polymer and copolymer of polyhydroxystyrene-polysulfone-polycarbonate was used to form the gas-selective film 2. More particularly, a benzene solution comprising 2 to 4 wt% of the copolymer was prepared and spread over a confined water surface. After removal of the

solvent, an ultrathin film was obtained, which was adhered to the support 3 (Celagard® 2400, made by Celanese Plastics Co.). Over the thin film was sprayed the covering material to form a covering layer. After drying in air, the covering layer was cured at 70°C for 8 to 9 minutes to obtain a composite film as shown in Fig. 1. The composite film had a contact angle, with water, of 100 to 110°.

The composite film was processed to obtain a sample having a modular dimension of a size of 30 cm × 30 cm and placed at a position near an exhaust port of a plant, followed by continuously operating a vacuum pump to a reduced pressure of 71.15 × $10^3$ Pa (535 mmHg) to determine a variation in amount of the gas passed through the composite film in relation to time. The composite film of this example show a reduction in the amount of about 7% even after 5000 hours as shown by curve A in Fig. 3.

The above procedure was repeated for comparison except that the covering layer 1 was not formed. The variation in the amount of this prior art film is shown as curve B in Fig. 3, revealing that the amount lowered by as large as about 30% after 1000 hours.

For comparison, polydimethylsiloxane having a critical surface tension of 20.8 dyne/cm was used to form a covering layer. The polydiemethylsiloxane was dissolved in benzene to obtain a 2 to 4 wt% benzene solution onto a gas-selective film-bearing support and air-dried to obtain a composite film of the type shown in Fig. 1 having a contact angle of 79 to 83°. This composite film was subjected to the life test in the same manner as described above. The results are shown in Fig. 3 by curve C, revealing that the life was prolonged to about 3 times the life of the covering layer-free composite film but the amount of the permeation after 3000 hours was reduced by 30%. Thus, the effect of stabilizing the permeation characteristic was very small as compared with the effect shown by the composite film of the present invention.

As will be seen from the above, when the selective film 2 is covered with the covering layer 1 having a large critical surface tension, it can stand use in continuous operations over a long term and is thus very effective in keeping the gas separability characteristic.

In this example, the catalyst was applied to the polymethylhydrogensiloxane. If the amount of the catalyst increases, the curing time can be shortened or the baking temperature can be lowered, so that the polysiloxane can be preferably used as a covering material for gas-selective films or supports which have poor resistance to heat.

Example 6

The general procedure of Example 5 was repeated except that fluorinated aklyl methacrylate resin was used as a material for the covering layer 1 and a trifluorotrichloroethane solution comprising 2 to 4 wt% of the resin was prepared and spread over a continuous water surface. The resulting film was set on the gas-selective film to obtain a composite film. The covering layer surface had a contact angle of 99 to 106°. The variation in amount of the permeated gas was small as shown by curve D in Fig. 3. After 6000 hours, the reduction rate was about 6%.

Example 7

The general procedure was repeated except that a two-layered gas-selective film of polyphenylene oxide/polydimethylsiloxane-polycarbonate copolymer was used to form the selective film thereby obtaining a composite film. The composite film had the outer surface whose critical contact angle was in the range of 100 to 110°. The gas permeation rate of a covering layer-free composite film lowered by about 40% at 1000 hours as shown by curve E in Fig. 3, but the composite film of this example showed the rate reduced only by 7% at 5000 hours after the continuous operation.

Example 8

The general procedure of Example 5 was repeated except that polymethyl fluorinated alkylsiloxane having a critical surface tension of 21 dyne/cm was used to form the covering layer 1, i.e. a solution of the polymer was spread over a confined water surface in a container of a large area and the gas-selective film-bearing support was brought into contact with the polymer film to obtain a composite film. The composite film had the outer surface whose contact angle was in the range of from 96 to 89°. The permeation rate in relation to time was small as shown by curve F in Fig. 3 and was reduced by about 8% even after 8000 hours.

Example 9

The general procedure of Example 6 was repeated using poly-1-methylpentene-1 as the material for the covering layer 1, thereby obtaining a composite film whose contact angle on the outer surface was in the range of from 110 to 113°. The permeation rate of the composite film lowered by only about 5% even after 6000 hours of the continuous operation as particularly shown by curve G in Fig. 3.

In Examples 5 through 9, four polymers were used as the covering layer 1 and two polymers were used as the selective film 2. Similar to the polymers described with regard to the foregoing examples, the variation in amount of gas permeation after 6000 hours was about from 5 to 10%. Thus, good results were obtained.

The gas-selective films which consist of a single layer and double layers was described hereinabove. With regard to the double layers, two types of polymers suitable for gas separation were used in Examples as superposed, but one layer may be rather gas-permeable in nature as described below with regard to a three-layered structure. As a matter of course, such one layer may have both gas permeability and

separability at the same time. As mentioned above, the selective film may consist of three or more layers and the following three-layered structure is most preferred in the practice of the invention. The three-layered structure comprises a first thin layer made of a polymer having good gas permeability, a second thin layer formed on the first layer and made of a polymer having good gas separability, and a third thin layer formed on the second thin layer, and made of a polymer having good gas permeability.

The polymers having good gas permeability which are suitably used as the first ultrathin layer include, for example, polyorgansiloxanes, reaction products of a three dimensional structure such as copolymers of polyorganosiloxanes and polyhydroxystyrene, copolymers of novolac resin and polydimethylsiloxane, copolymers of polyhydroxystyrene-polysulfone-polydimethylsiloxane, and copolymers of polyhydroxystyrene-polyurethane-polydimethylsiloxane and mixtures thereof. The copolymers or reaction products should have a permeability to oxygen of 0.752 $m^2.5^{-1}$. $Pa^4$ ($1 \times 10^{-8}$ $cc.cm/cm^2$.second.cmHg) or higher. The thickness of the first layer is preferred to be in the range of from 0.2 to 1.0 μm. This is because smaller thicknesses results in poor durability and large thicknesses bring about reduction of an initial amount of gas permeation.

The third thin layer may be made of the same polymer as used to form the first thin layer and the polymers indicated with reference to the first thin layer are all used for the third layer. Preferably, copolymers of polyhydroxystyrene-polysulfone-polydimethylsiloxane are preferred because it has good gas permeability and separability. The polysulfone useful in the copolymers useful in the practice of the invention may be reaction products of bisphenol A type compounds in which methyl groups joined to the carbon of bisphenol A may be each replaced by an alkyl group having from 2 to 5 carbon atoms and 1,4-dichlorodiphenylsulfone.

The second ultrathin layer should be made of polymers having good gas separability. Examples of such polymers include polyphenylene oxides having recurring units of the formula

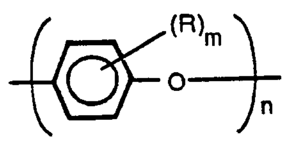

in which R represents a linear or branched alkyl group having from 1 to 5 carbon atoms and m is an integer of 1, 2 or 3, n is an integer sufficient to give a degree of polymerization of 100 to 2000; polyoefins having recurring units of the formula

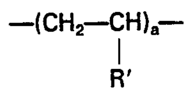

in which R′ represents a linear or branched alkyl or halogenated alkyl group having from 2 to 8 carbon atoms and a represents an integer sufficient to give a degree of polymerization of 150 to 1500; and polyacetylenes having recurring units of the formula

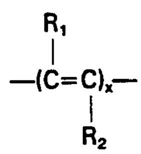

in which $R_1$ represents a hydrogen atom or a halogen atom, $R_2$ represents a linear or branched alkyl group having from 2 to 8 carbon atoms or a phenyl group and x represents an integer sufficient to give a degree of polymerization of 150 to 15,000.

The gas-selective film of the one, two or three-layered structure is supported on a microporous film or sheet made of various polymers ordinarily used for these purposes. Typical examples of such polymers include polyolefins such as polyethylene, polypropylene and the like, polycondensates such as polysulfones, polycarbonates and the like.

Fig. 4 particularly shows a composite film of the three-layered structure described above. In the figure, there is shown a composite film F′ which includes a microporous polymer support 11 such as Celagard® 2400 made by Celanese Plastics Company. Indicated by 12 is a first ultrathin layer made of polymers having good gas permeability and by 13 is a second ultrathin film having good gas separability. Indicated by 14 is a third ultrathin layer made of polymers with good gas permeability.

We made tests using three-layered selective films. More particularly, composite films of the three-layered structure were made using Celagard® 2400 as the support 11, a reaction product of polyhydroxystyrene-polysulfone-polydimethylsiloxane as the first and third layers 11 and 14, and polyphenylene oxide and poly-4-methylpentene-1 as the second layer 13. Polymethylhydrogensiloxane was used as a covering layer for each sample. Total eight samples were subjected to tests of determining a oxygen permeation rate and a durability. The results are summarized in Table below.

TABLE

| Sample No. | Material for First and Third Layer | Materials for Second Layer | Thickness of Thin Layers: First Layer | Second Layer | Third Layer | Oxygen Permeation Rate *1 $Fo_2$ ($cc/cm^3.sec.atm.$) | $Fo_2/FN_2$ | Durability Variation Rate in Amount of Gas Permeated after 1000 hrs (%) *2 |
|---|---|---|---|---|---|---|---|---|
| 1 | Copolymer of polyhydroxy-styrene/polysulfone/polydimethyl-siloxane | Polyphenylene oxide | 0.05 | 0.10 | 0.05 | $3.30 \times 10^{-2}$ | 3.50 | 45 |
| 2 | | | 0.10 | 0.10 | 0.05 | $3.15 \times 10^{-2}$ | 3.65 | 52 |
| 3 | | | 0.20 | 0.10 | 0.05 | $3.10 \times 10^{-2}$ | 3.72 | 90 |
| 4 | | | 0.30 | 0.10 | 0.05 | $3.05 \times 10^{-2}$ | 3.75 | 92 |
| 5 | | Poly-4-methyl-methylpentene-1 | 0.05 | 0.10 | 0.05 | $4.21 \times 10^{-2}$ | 2.81 | 69 |
| 6 | | | 0.10 | 0.10 | 0.05 | $4.52 \times 10^{-2}$ | 2.90 | 73 |
| 7 | | | 0.20 | 0.10 | 0.05 | $4.35 \times 10^{-2}$ | 3.05 | 94 |
| 8 | | | 0.30 | 0.10 | 0.05 | $4.10 \times 10^{-2}$ | 3.10 | 95 |

*1 The thicknesses of the individual Layers are each calculated from an area of a film on a water surface.
*2 The initial amount of permeated gas was taken as 100 and an amount of the gas after 1000 hours was indicated as in index to the initial amount.

According to the above table, when the thickness of the first layer is changed from 0.05 to 0.3 μm, the oxygen permeation rate is kept almost constant. Athough not shown in this table, the first layer having a thickness exceeding 1.0 μm had an initial oxygen permeation rate of about 1/3 time the initial rate of the above first layers. On the other hand, the durability of the composite films is greatly influenced by the thickness of the first layer, i.e. when the thickness is changed from 0.05 to 0.10 μm, the amount of gas permeation after 1000 hours varies up to 50% of the initial amount. However, when the thickness exceeds 0.2 μm, the durability drastically increases and the amount after 1000 hours varies only to an extent of 90% of the initial amount.

Polyphenylene oxide and poly-4-methylpentene-1 were tested as the second layer used for gas separation, with similar tendencies being obtained. The above results thus reveal that the thickness of the first layer is in the range of from 0.2 to 1.0 μm, within which the composite film has good gas separability and a large permeation rate of gas with a much improved durability.

Fig. 5 shows the results of the durability test using the sample Nos. 1 and 3, revealing that when the thickness of the first layer is 0.5 μm, the durability is poor and the amount of gas permeation after 1000 hours lowers to 45% of the initial amount. On the other hand, the composite film of No. 3 according to the invention has good durability and an amount of gas permeation after 1000 hours of 90% based on the initial amount.

As will be seen from the above results of the Table, the composite film of the invention can keep a stable gas permeation characteristic over a long term even when used under severe operating conditions. While prior art gas permeation films are so short in life that when they are continuously applied for 1000 to 1500 hours, the amount of gas permeation is reduced to an extent of 20 to 60%, the composite films of the three-layered structure involve little variation in an amount of gas permeation after 5000 to 8000 hours. Thus, the composite films of the invention have practically satisfactory characteristics but if the composite film has been used over a very long time or a higher amount of gas permeation is needed after use for a time, such film may be regenerated as follows.

**Claims**

1. A gas-permeable composite film which comprises, on a microporous polymer support in the following order, a gas selective film consisting of at least one layer for separating and concentrating an intended gas from mixed gases, and a covering layer formed on the film and having a thickness of from 5 to 20 nm, the covering layer being made of a polymer having a critical surface tension not larger than 30 dyne/cm, a contact angle of water with a surface of the covering layer contacting the mixed gas being 90° or higher.

2. The gas-permeable composite film according to Claim 1, wherein the covering layer is made of a polymer selected from the group consisting of polymethylhydrogensiloxane, fluorinated alkyl methacrylate resins, poly-4-methylpentene-1, polymethyl fluorinated alkylsiloxanes and mixtures thereof.

3. The gas-permeable composite film according to Claim 2, wherein said polymer is said polymethylhydrogensilicone.

4. The gas-permeable composite film according to Claim 3, wherein said polymer is a cured product of said polymethylhydrogensiloxane.

5. The gas-permeable composite film according to Claim 1, wherein the at least one layer contacting with the covering layer is made of a resin composition comprising from 50 to 90 wt% of a reaction product of polyhydroxystyrene-polysulfone-polydimethylsiloxane.

6. The gas-permeable composite film according to Claim 5, wherein the at least one layer is made of a reaction product of polyhydroxystyrene-polysulfone-polydimethylsiloxane.

7. The gas-permeable composite film according to Claim 1, wherein said at least one layer is made of a polymer selected from the group consisting of polyphenylene oxides of the general formula

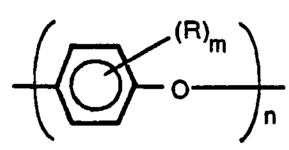

in which R represents a linear or branched alkyl group having from 1 to 5 carbon atoms, and m is an integer of 1, 2 or 3, and n is an integer sufficient to give a degree of polymerization of 100 to 2000, polyolefins of the formula

$$-(CH_2-\underset{\displaystyle R'}{\underset{|}{C}}H)_a-$$

in which R' represents a linear or branched alkyl group or halogenated alkyl group having from 2 to 8 carbon atoms, and a is an integer sufficient to give a degree of polymerization of 150 to 1500, and polyacetylenes of the general formula

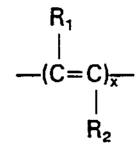

in which $R_1$ represents a hydrogen atom or a halogen atom, $R_2$ represents a linear or branched alkyl group having from 2 to 8 carbon atoms or a phenyl group, and x is an integer sufficient to give a degree of polymerization of 150 to 15,000.

8. The gas-permeable composite film according to Claim 1, wherein said gas-selective film has a two-layered structure which comprises a layer of a polymer selected from the group consisting of polyphenylene oxide, polydimethylsiloxane-polycarbonate copolymers and copolymers of polyhydroxystyrene-polysulfone-polymethylsiloxane and a layer of the above-defined polymer but different from the polymer used for the first-mentioned layer.

9. The gas-permeable composite film according to Claim 1, wherein said gas-selective film has a two-layered structure which comprising a layer of a polymer having good gas permeability and a layer of a polymer having good gas separability in this or reverse order.

10. The gas-permeable composite film according to Claim 9, wherein the gas-permeable layer is made of a polymer selected from the group consisting of polyorganosiloxanes, copolymers of polyorganosiloxanes and polyhydrogenstyrene, copolymer of novolac and polyorganosiloxanes, copolymers of polyhydroxystyrene-polysulfone-polydimethylsiloxane and copolymers of polyhydroxystyrene-polyurethane-polydimethylsiloxane and the gas-separable layer is made of a polymer selected from the group consisting of polyphenylene oxides of the general formula

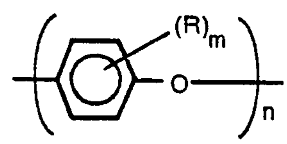

in which R represents a linear or branched alkyl group having from 1 to 5 carbon atoms, m is an integer of 1, 2 or 3, and n is an integer sufficient to give a degree of polymerization of 100 to 2000, polyolefins of the formula

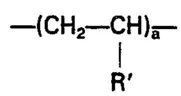

in which R' represents a linear or branched alkyl group or halogenated alkyl group having from 2 to 8 carbon atoms, and a is an integer sufficient to give a degree of polymerization of 150 to 1500, and polyacetylenes of the general formula

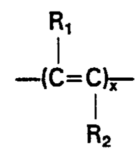

in which $R_1$ represents a hydrogen atom or a halogen atom, $R_2$ represents a linear or branched alkyl group having from 2 to 8 carbon atoms or a phenyl group, and x is an integer sufficient to give a degree of polymerization of 150 to 15,000.

11. The gas-permeable composite film according to Claim 1, wherein said gas selective film consists of a first ultrathin layer of a polymer having good gas permeability, a second ultrathin layer formed on the first layer and made of a polymer having good gas separability, and a third ultrathin layer formed on the second layer and made of a polymer having good gas permeability, said first thin layer having a thickness of from 0,2 to 1,0 μm and an oxygen permeability constant of not smaller than 0,752 $m^2.s^{-1}$ $Pa^{-1}$ ($1 \times 10^{-8}$ cc.cm/$cm^2$.second.cmHg).

12. The gas-permeable composite film according to Claim 11, wherein the first and third layers are each made of a polymer selected from the group consisting of copolymers of polyhydroxystyrene-polydiemethylsiloxane, copolymers of novolac-polydimethylsiloxanes, copolymers of polyhydroxystyrene-polysulfone-polydimethylsiloxane, copolymers of novolac-polysulfones-polydimethylsiloxane and copolymers of polyhydroxystyrene-polyurethane-polydimethylsiloxane.

13. The gas-permeable composite film according to Claim 12, wherein said first and third layers are each made of a copolymer of polyhydroxystyrene-polysulfone-polydimethylsiloxane.

14. The gas-permeable composite film according to Claim 11, wherein said second thin film is made of a polymer selected from the group consisting of polyphylene oxides of the general formula

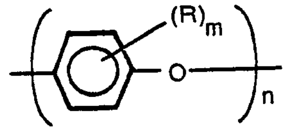

in which R represents a linear or branched alkyl group having from 1 to 5 carbon atoms, and m is an integer of 1, 2 or 3, and n is an integer sufficient to give a degree of polymerization of 100 to 2000, polyolefins of the formula

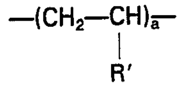

in which R' represents a linear or branched alkyl group or halogenated alkyl group having from 2 to 8 carbon atoms, and a is an integer sufficient to give a degree of polymerization of 150 to 1500, and polyacetylenes of the general formula

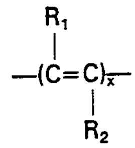

in which $R_1$ represents a hydrogen atom or a halogen atom, $R_2$ represents a linear or branched alkyl group having from 2 to 8 carbon atoms or a phenyl group, and x is an integer sufficient to give a degree of polymerization of 150 to 15,000.

**Patentansprüche**

1. Gasdurchlässige Verbundfolie, die auf einem mikroporösen Polymer-Schichtträger in der folgenden Reihenfolge einen gasselektiven Film zum Abtrennen und Konzentrieren eines gewünschten Gases aus gemischten Gasen, der aus wenigstens einer Schicht besteht, und eine Deckschicht, die auf dem Film gebildet ist und eine Dicke von 5 bis 20 nm hat, aufweist, wobei die Deckschicht aus einem Polymer hergestellt ist, das eine kritische Oberflächenspannung von nicht mehr als 30 mN/m (30 dyn/cm) hat, wobei der Kontaktwinkel von Wasser mit einer das gemischte Gas berührenden Oberfläche der Deckschicht 90° beträgt oder größer ist.

2. Gasdurchlässige Verbundfolie nach Anspruch 1, bei der die Deckschicht aus einen Polymer hergestellt ist, das aus der Gruppe ausgewählt ist, die aus Poly(methylhydrogensiloxan), Fluoralkylmethacrylatharzen, Poly(4-methyl-1-penten), Poly(methylfuoralkylsiloxanen) und Mischungen davon besteht.

3. Gasdurchlässige Verbundfolie nach Anspruch 2, bei der das Polymer das Poly(methylhydrogensiloxan) ist.

4. Gasdurchlässige Verbundfolie nach Anspruch 3, bei der das Polymer ein Härtungsprodukt des Poly(methylhydrogensiloxans) ist.

5. Gasdurchlässige Verbundfolie nach Anspruch 1, bei der die wenigstens eine Schicht, die die Deckschicht berührt, aus einer Harzmischung hergestellt ist, die 50 bis 90 Masse% eines Reaktionsprodukts von Poly(hydroxystyrol)-Polysulfon-Poly(dimethylsiloxan) enthält.

6. Gasdurchlässige Verbundfolie nach Anspruch 5, bei der die wenigstens eine Schicht aus einem Reaktionsprodukt von Poly(hydroxystyrol)-Polysulfon-Poly(dimethylsiloxan) hergestellt ist.

7. Gasdurchlässige Verbundfolie nach Anspruch 1, bei der die wenigstens eine Schicht aus einem Polymer hergestellt ist, das aus der Gruppe ausgewählt, die aus Polyphenylenoxiden der allgemeinen Formel

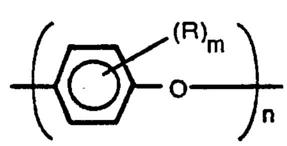

worin R eine lineare oder verzweigte Alkylgruppe mit 1 bis 5 Kohlenstoffatomen bedeutet, m eine ganze Zahl, und zwar 1, 2 oder 3, ist und n eine ganze Zahl ist, die ausreicht, um einen Polymerisationsgrad von 100 bis 2000 zu ergeben; Polyolefinen der Formel

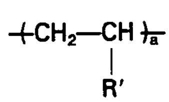

worin R' eine lineare oder verzweigte Alkylgruppe oder halogenierte Alkylgruppe mit 2 bis 8

Kohlenstoffatomen bedeutet und a eine ganze Zahl ist, die ausreicht, um einen Polymerisationsgrad von 150 bis 1500 zu ergeben; und Polyacetylenen der allgemeinen Formel

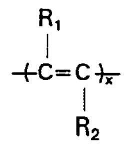

worin $R_1$ ein Wasserstoffatom oder ein Halogenatom bedeutet, $R_2$ eine lineare oder verzweigte Alkylgruppe mit 2 bis 8 Kohlenstoffatomen oder eine Phenylgruppe bedeutet und x eine ganze Zahl ist, die ausreicht, um einen Polymerisationsgrad von 150 bis 15000 zu ergeben, besteht.

8. Gasdurchlässige Verbundfolie nach Anspruch 1, bei der der gasselektive Film eine zweischichtige Struktur hat, die aus einer Schicht aus einem Polymer, das aus der Gruppe ausgewählt ist, die aus Polyphenylenoxid, Poly(dimethylsiloxan)-Polycarbonat-Copolymeren und Copolymeren von Poly(hydroxystyrol)-Polysulfon-Poly(methylsiloxan) besteht, und einer Schicht aus dem vorstehend definierten Polymer, das sich jedoch von dem für die ersterwähnte Schicht verwendeten Polymer unterscheidet, besteht.

9. Gasdurchlässige Verbundfolie nach Anspruch 1, bei der der gasselektive Film eine zweischichtige Struktur hat, die aus einer Schicht aus einem Polymer mit guter Gasdurchlässigkeit und einer Schicht aus einem Polymer mit gutem Gasabtrennvermögen in dieser oder in der umgekehrten Reihenfolge besteht.

10. Gasdurchlässige Verbundfolie nach Anspruch 9, bei der die gasdurchlässige Schicht aus einem Polymer hergestellt ist, das aus der Gruppe ausgewählt ist, die aus Polyorganosiloxanen, Copolymeren von Polyorganosiloxanen und Poly(hydroxystyrol), Copolymeren von Novolak und Polyorganosiloxanen, Copolymeren von Poly(hydroxystyrol-Polysulfon-Poly(dimethylsiloxan) und Copolymeren von Poly(hydroxystyrol)-Polyurethan-Poly(dimethylsiloxan) besteht, und die Schicht mit Gasabtrennvermögen aus einem Polymer hergestellt ist, das aus der Gruppe ausgewählt ist, die aus Polyphenylenoxiden der allgemeinen Formel

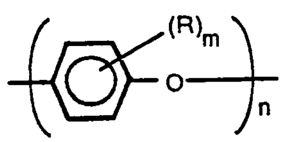

worin R eine lineare oder verzweigte Alkylgruppe mit 1 bis 5 Kohlenstoffatomen bedeutet, m eine ganze Zahl, und zwar 1, 2 oder 3, ist und n eine ganze Zahl ist, die ausreicht, um einen Polymerisationsgrad von 100 bis 200 zu ergeben; Polyolefinen der Formel

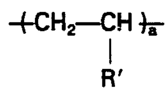

worin R′ eine lineare oder verzweigte Alkylgruppe oder halogenierte Alkylgruppe mit 2 bis 8 Kohlenstoffatomen bedeutet und a eine ganze Zahl ist, die ausreicht, um einen Polymerisationsgrad von 150 bis 1500 zu ergeben; und Polyacetylenen der allgemeinen Formel

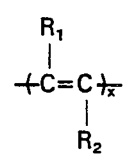

worin $R_1$ ein Wasserstoffatom oder ein Halogenatom bedeutet, $R_2$ eine lineare oder verzweigte Alkylgruppe mit 2 bis 8 Kohlenstoffatomen oder eine Phenylgruppe bedeutet und x eine ganze Zahl ist, die ausreicht, um einen Polymerisationsgrad von 150 bis 15000 zu ergeben, besteht.

11. Gasdurchlässige Verbundfolie nach Anspruch 1, bei der der gasselektive Film aus einer ersten ultradünnen Schicht aus einem Polymer mit guter Gasdurchlässigkeit, einer zweiten ultradunnen Schicht, die auf der ersten Schicht gebildet und aus einem Polymer mit gutem Gasabtrennvermögen hergestellt ist, und einer dritten ultradünnen Schicht, die auf der zweiten Schicht gebildet und aus einem Polymer mit guter Gasdurchlässigkeit hergestellt ist, besteht, wobei die erste dünne Schicht eine Dicke von 0,2 bis 1,0 µm und eine nicht weniger als 0752 $m^2 \cdot s^{-1} \cdot Pa^{-1}$ ($1 \cdot 10^{-8}$ $cm^3 \cdot cm/cm^2 \cdot s \cdot cm$ Hg) betragende Sauerstoffdurchlässigkeitskonstante hat.

12. Gasdurchlässige Verbundfolie nach Anspruch 11, bei der sowohl die erste Schicht als auch die dritte Schicht aus einem Polymer hergestellt ist, das aus der Gruppe ausgewählt ist, die aus Copolymeren von Poly(hydroxystyrol)-Poly(dimethylsiloxan), Copolymeren von Novolak-Poly(dimethylsiloxanen),

Copolymeren von Poly(hydroxystyrol)-Polysulfon-Poly(dimethylsiloxan) Copolymeren von Novolak-Polysulfonen-Poly(dimethylsiloxan) und Copolymeren von Poly(hydroxystyrol)-Polyurethan-Poly(dimethylsiloxan) besteht.

13. Gasdurchlässige Verbundfolie nach Anspruch 12, bei der sowohl die erste Schicht als auch die dritte Schicht aus einem Copolymer von Poly(hydroxystyrol)-Polysulfon-Poly(dimethylsiloxan) hergestellt ist.

14. Gasdurchlässige Verbundfolie nach Anspruch 11, bei der die zweite dünne Schicht aus einem Polymer hergestellt ist, das aus der Gruppe ausgewählt ist, die aus Polyphenylenoxiden der allgemeinen Formel

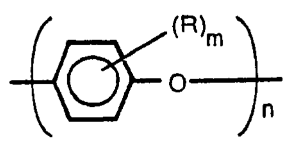

worin R eine lineare oder verzweigte Alkylgruppe mit 1 bis 5 Kohlenstoffatomen bedeutet, m eine ganze Zahl, und zwar 1, 2 oder 3, ist und n eine ganze Zahl ist, die ausreicht, um einen Polymerisationsgrad von 100 bis 2000 zu ergeben; Polyolefinen der Formel

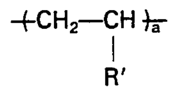

worin R' eine lineare oder verzweigte Alkylgruppe oder halogenierte Alkylgruppe mit 2 bis 8 Kohlenstoffatomen bedeutet und a eine ganze Zahl ist, die ausreicht, um einen Polymerisationsgrad von 150 bis 1500 zu ergeben; und Polyacetylenen der allgemeinen Formel

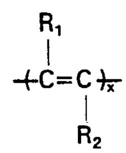

worin $R_1$ ein Wasserstoffatom oder ein Halogenatom bedeutet, $R_2$ eine lineare oder verzweigte Alkylgruppe mit 2 bis 8 Kohlenstoffatomen oder eine Phenylgruppe bedeutet und x eine ganze Zahl ist, die ausreicht, um einen Polymerisationsgrad von 150 bis 15000 zu ergeben, besteht.

**Revendications**

1. Un film composite perméable aux gaz qui comprend, sur un support polymère microporeux, dans l'ordre suivant un film de sélection des gaz composé d'au moins une couche pour la séparation et la concentration d'un gaz voulu à partir de gaz mélangés, et une couche de couverture formée sur le film et d'épaisseur comprise entre 5 et 20 nm, la couche de couverture étant constituée par un polymère ayant une tension superficielle critique d'au plus 30 dyne/cm, l'angle de contact de l'eau avec une surface de la couche de couverture en contact avec le gaz mélangé valant 90° ou plus.

2. Le film composite perméable aux gaz selon la revendication 1, dans lequel la couche de couverture est constituée par un polymère choisi dans le groupe composé par polyméthylhydrogénosiloxane, résines fluorées de méthacrylate d'alkyle poly-4-méthylpentène-1, polyméthylfluoroalkysiloxanes et mélanges de ceux-ci.

3. Le film composite perméable aux gaz selon la revendication 2, dans lequel ledit polymère est ledit polyméthylhydrogénosilicone.

4. Le film composite perméable aux gaz selon la revendication 3, dans lequel ledit polymère est un produit durci dudit polyméthylhydrogénosiloxane.

5. Le film composite perméable aux gaz selon la revendication 1, dans lequel la couche en contact avec la couche de couverture est constituée par une composition de résine comprenant entre 50 et 90% en poids d'un produit de réaction de polyhydroxystyrène-polysulfone-polydiméthylsiloxane.

6. Le film composite perméable aux gaz selon la revendication 5, dans lequel ladite couche est constituée par un produit de réaction de polyhydroxystyrène-polysulfone-polydiméthylsiloxane.

7. Le film composite perméable aux gaz selon la revendication 1, dans lequel la couche ou au moins une des couches du film de sélection des gaz est constituée par un polymère choisi dans le groupe composé par polyoxyphénylènes de formule générale

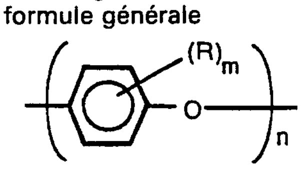

dans laquelle R représente un groupement alkyle linéaire ou ramifié comprenant de 1 à 5 atomes de carbone, m est un entier valant 1, 2 ou 3, et n est un entier suffisant pour donner un degré de polymérisation de 100 à 2000, polyoléfines de formule

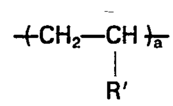

dans laquelle R' représente un groupement alkyle linéaire ou ramifié ou un groupement akyle halogéné comprenant de 2 à 8 atomes de carbone, et a est un entier suffisant pour donner un degré de polymérisation de 150 à 1500, et polyacétylènes de formule générale

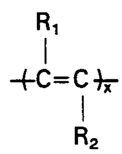

dans laquelle $R_1$ représente un atome d'hydrogène ou d'halogène, $R_2$ représente un groupement alkyle linéaire ou ramifié comprenant de 2 à 8 atomes de carbons ou un groupement phényle, et x est un entier suffisant pour donner un degré de polymérisation de 150 à 15000.

8. Le film composite perméable aux gaz selon la revendication 1, dans lequel ledit film de sélection des gaz présente une structure à deux couches, qui comprend une couche d'un polymère choisi dans le groupe composé par polyoxyphénylènes, copolymères polydiméthylsiloxane-polycarbonate et copolymères de polyhydroxystyrène-polysulfone-polyméthylsiloxane et une couche du polymère défini ci-dessus, mais différent du polymère utilisé pour la première couche citée.

9. Le film composite perméable aux gaz selon la revendication 1, dans lequel ledit film de sélection des gaz présente une structure à deux couches comprenant une couche d'un polymère avant une bonne perméabilité aux gaz et une couche d'un polymère capable d'une bonne séparation des gaz, dans cet ordre ou dans l'ordre inverse.

10. Le film composite perméable aux gaz selon la revendication 9, dans lequel la couche perméable aux gaz est constituée par un polymère choisi dans le groupe composé par polyorganosiloxanes, copolymères de polyorganosiloxanes et polyhydrogénostyrène, copolymère de novolaque et polyorganosiloxanes, copolymères de polyhydroxystyrène-polysulfone-polydiméthylsiloxane et copolymères de polyhydroxystyrène-polyuréthane-polydiméthylsiloxane, et la couche capable de séparer les gaz est constituée par un polymère choisi dans le groupe composé par polyoxyphénylènes de formule générale

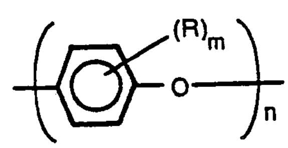

dans laquelle R représente un groupement alkyle linéaire ou ramifié comprenant de 1 à 5 atomes de carbone, m est un entier valant 1, 2 ou 3, et n est un entier suffisant pour donner un degré de polymérisation de 100 à 2000, polyoléfines de formule

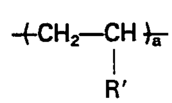

dans laquelle R' représente un groupement alkyle linéaire ou ramifié ou un groupement akyle halogéné comprenant de 2 à 8 atomes de carbone, et a est un entier suffisant pour donner un degré de polymérisation de 150 à 1500, et polyacétylènes de formule générale

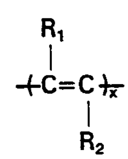

dans laquelle $R_1$ représente un atome d'hydrogène ou d'halogène, $R_2$ représente un groupement alkyle linéaire ou ramifié comprenent de 2 à 8 atomes de carbone ou un groupement phényle, et x est un entier suffisant pour donner un degré de polymérisation de 150 à 15000.

11. Le film composite perméable aux gaz selon la revendication 1, dans lequel ledit film de sélection des gaz consiste en une première couche ultramince d'un polymère ayant une bonne perméabilité aux gaz,

une deuxième couche ultramince, formée sur la première couche et constituée par un polymère capable d'une bonne séparation des gaz et une troisième couche ultramince, formée sur la deuxième couche et constituée par un polymère ayant une bonne perméabilite aux gaz, ladite première couche mince présentant une épaisseur comprise entre 0.2 et 1.0 µm et une constante de perméabilité à l'oxygène d'au moins 0.752 $m^2.s^{-1}.\ Pa^{-1}$ ($1 \times 10^{-8}$ $cm^3.cm/cm^2$.seconde.cmHg).

12. Le film composite perméable aux gaz selon la revendication 11, dans lequel les première et troisième couches sont constituée chacune par un polymère choisi dans de groupe composé des copolymères de polyhydroxystyrène-polydiméthylsiloxane, copolymères de novolaque-polydiméthylsiloxanes, copolymères de polyhydroxystyrène-polysulfone-polydiméthylsiloxane, copolymères de novolaque-polysulfones-polydiméthylsiloxane et copolymères de polyhydroxystyrène-polyuréthane-polydiméthylsiloxane.

13. Le film composite perméable aux gaz selon la revendication 11, dans lequel lesdites première et troisième couches sont constituée chacune par un copolymère de polyhydroxystyrène-polysulfone-polydiméthylsiloxane.

14. Le film composite perméable aux gaz selon la revendication 11, dans lequel ladite deuxième couche mince est constituée par un polymère choisi dans le groupe composé par polyoxyphénylènes de formule générale

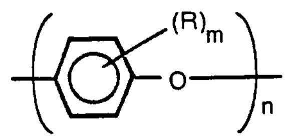

dans laquelle R représente un groupement alkyle linéaire ou ramifié comprenant de 1 à 5 atomes de carbone, m est un entier valant 1, 2 ou 3, et n est un entier suffisant pour donner un degré de polymérisation de 100 à 2000, polyoléfines de formule

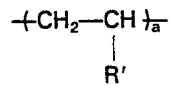

dans laquelle R' représente un groupement alkyle linéaire ou ramifié ou un groupement akyle halogéné comprenant de 2 à 8 atomes de carbone, et a est un entier suffisant pour donner un degré de polymérisation de 150 à 1500, et polyacétylènes de formule générale

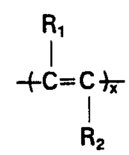

dans laquelle $R_1$ représente un atome d'hydrogène ou d'halogène, $R_2$ représente un groupement alkyle linéaire ou ramifié comprenant de 2 à 8 atomes de carbone ou un groupement phényle, et x est un entier suffisant pour donner un degré de polymérisation de 150 à 15000.

FIG. 1

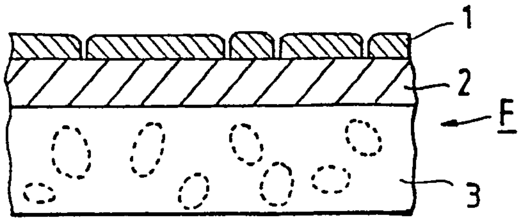
1
2
F
3

FIG. 2

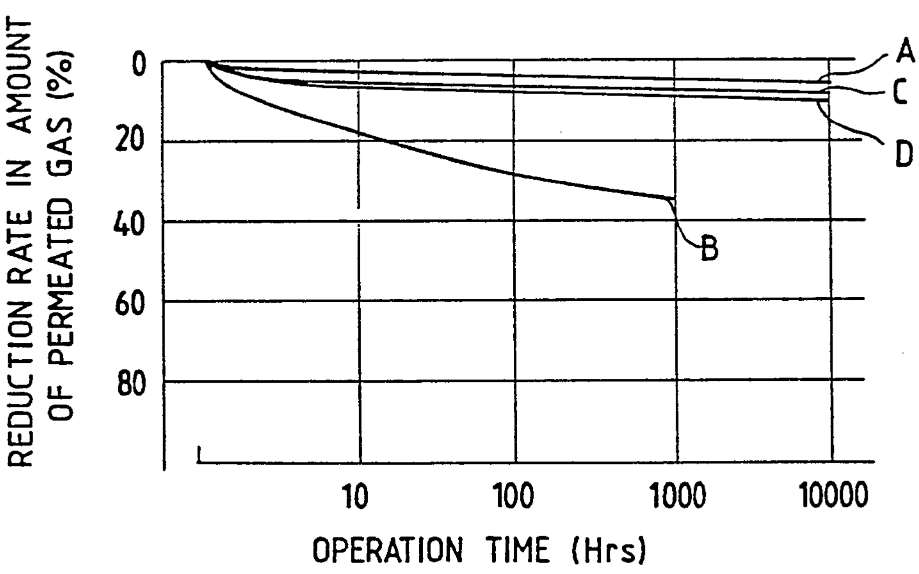
REDUCTION RATE IN AMOUNT OF PERMEATED GAS (%)
0
20
40
60
80
A
C
D
B
10
100
1000
10000
OPERATION TIME (Hrs)

FIG. 3

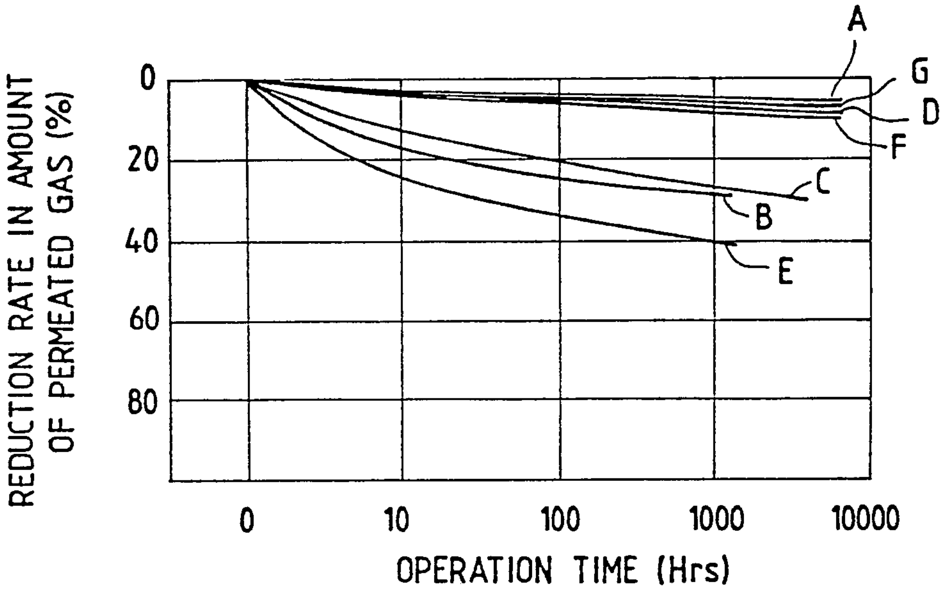
REDUCTION RATE IN AMOUNT OF PERMEATED GAS (%)
0
20
40
60
80
0
10
100
1000
10000
OPERATION TIME (Hrs)
A
G
D
F
C
B
E

FIG. 4

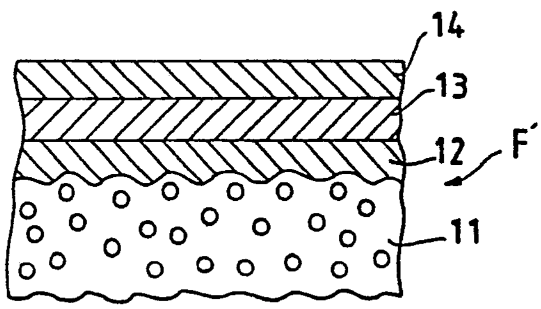
14
13
12
F'
11

FIG.5

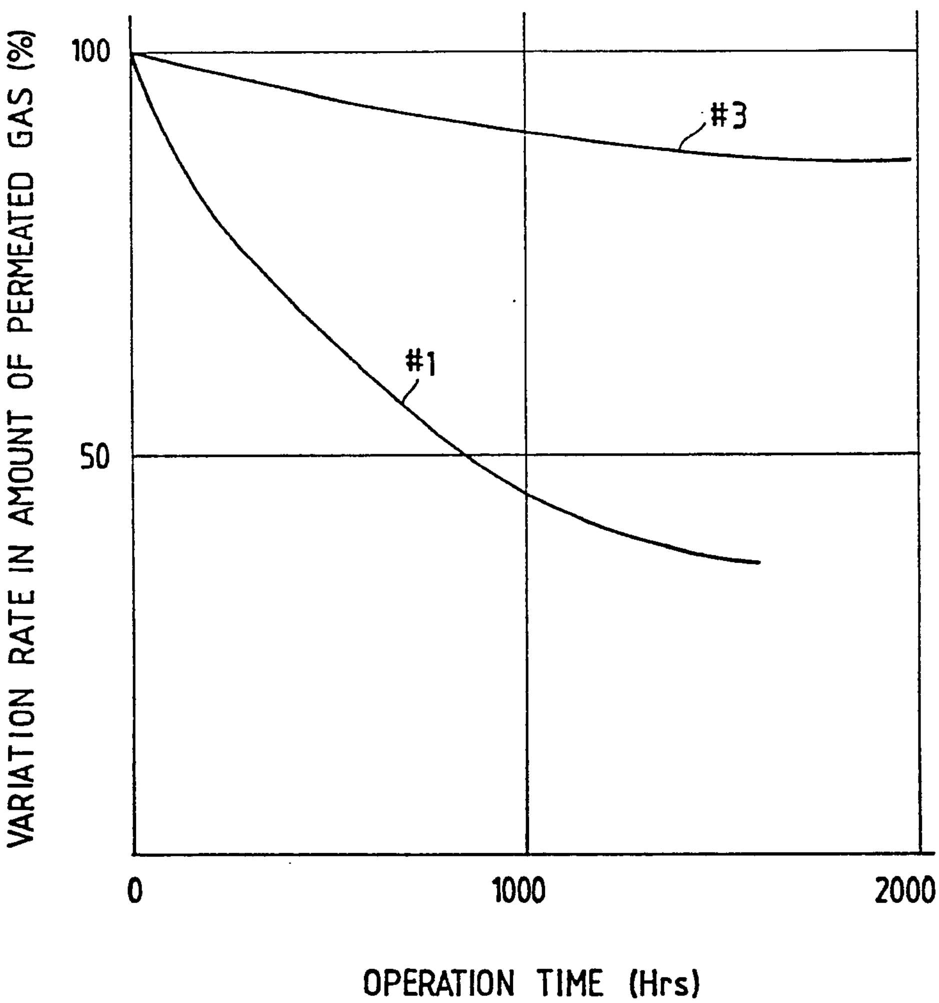
VARIATION RATE IN AMOUNT OF PERMEATED GAS (%)
100
50
#3
#1
0
1000
2000
OPERATION TIME (Hrs)